# EUROPEAN PATENT SPECIFICATION

(11) **EP 2 632 201 B1**
(45) Date of publication and mention of the grant of the patent: **08.11.2017**
(21) Application number: 12848763.4
(22) Date of filing: 05.09.2012
(51) Int. Cl.: H04W 48/16, H04W 48/12, H04W 48/18

(54) **METHOD AND DEVICE FOR NETWORK ACCESS**
NETZWERKZUGANGSVERFAHREN UND -VORRICHTUNG
PROCÉDÉ ET DISPOSITIF D'ACCÈS AU RÉSEAU

(30) Priority: 25.11.2011 CN 201110380507
(43) Date of publication of application: 28.08.2013
(73) Proprietor: Huawei Technologies Co., Ltd., Longgang District Shenzhen, Guangdong 518129 (CN)
(72) Inventor: WANG, Hailong, Shenzhen Guangdong 518129 (CN); HU, Chunli, Shenzhen Guangdong 518129 (CN)
(74) Representative: Isarpatent
(86) International application number: PCT/CN2012/080990
(87) International publication number: WO 2013/075527

(56) References cited:
- WO-A1-2011/022873
- WO-A1-2011/083664
- CN-A- 1 784 064
- CN-A- 1 788 456
- CN-A- 1 864 394
- CN-A- 1 909 728
- CN-A- 101 223 804
- CN-A- 101 400 097
- CN-A- 102 026 328
- CN-A- 102 368 865

## Description

### FIELD OF TECHNOLOGY

The present invention relates to the field of mobile communication, and in particular, to a network access method and apparatus.

### BACKGROUND

For a mobile communication network, in a scenario where networks are shared, a cell may belong to networks of multiple operators, including one primary operator and multiple secondary operators. When a cell broadcasts a system message in a broadcast channel, a public land mobile network identifier (Public Land Mobile Network Identifier, PLMN ID) list (List) of the cell is carried. General order of the PLMN ID List is: A PLMN ID of the primary operator ranks first, and PLMN IDs of the secondary operators follow.

When a UE roams, and when the user equipment (User Equipment, UE) entering a cell selects an operator network, the UE selects, according to a certain rule, one VPLMN from multiple visited PLMNs (Visited PLMN, VPLMN) for providing services in the PLMN ID List of the system message in the broadcast channel of the cell.

In a manual mode, a user may manually select a PLMN ID in the UE of the user for access, thereby implementing that the roaming user randomly accesses different PLMNs.

However, actually, in an operator PLMN selection manner set by most UEs, only a first PLMN ID in the PLMN ID List is selected for use.

Because the order of the PLMN ID List is fixed, a result of the selection manner is that basically all roaming users select the first PLMN in the PLMN ID List for access, while PLMNs ranking second and third have no opportunity to be selected by the roaming users. Consequently, operator networks do not have equal opportunities to be accessed by the UEs, which results in that more communication fees are charged by a first operator in the PLMN ID List because there are more access opportunities while few communication fees are charged by other operators because there are few access opportunities.

WO 2011/083664 A1 provides for method of selection by a User Device of a desired PLMN offering a desired service. The method includes creating a list of network identifiers for the said plurality of PLMNs respectively, and locating the identifier of the said desired PLMN at the predetermined position within the said list.

### SUMMARY

Embodiments of the present invention provide a network access method and apparatus, so that a roaming user may access different operator networks in a scenario where networks are shared, and different operator networks have a relatively equal opportunity to be accessed by a UE.

One aspect of the present invention provides a network access method including:
generating a communication network identifier list corresponding to a communication network to which a cell belongs, wherein all communication network identifiers in the communication network identifier list are arranged in rotation order according to a rotation period and a weight parameter, and the communication network identifiers are corresponding to all communication networks; and,
sending the communication network identifier list, which is used by a user equipment UE for selecting a communication network corresponding to a communication network identifier at a fixed position in the communication network identifier list for access.

Another aspect of the present invention provides a network access apparatus including:
a generating unit, configured to generate a communication network identifier list corresponding to a communication network to which a cell belongs, wherein all communication network identifiers in the communication network identifier list are arranged in rotation order according to a rotation order and a weight parameter, and the communication network identifiers are corresponding to all communication networks; and a sending unit, configured to send the communication network identifier list, which is used by a UE for selecting a communication network corresponding to a communication network identifier at a fixed position in the communication network identifier list for access.

With the network access method and apparatus in the embodiments of the present invention, because the communication network identifiers in the communication network identifier list are arranged in rotation order according to a rotation period and a weight parameter, the UE may access a communication network according to a communication network identifier arranged in rotation order according to a rotation period and a weight parameter in the network identifier list, which effectively avoids a problem that one communication network is accessed at a high probability while an access probability of other networks is low, so that all operator networks have a relatively equal opportunity to be accessed by the UE.

### BRIEF DESCRIPTION OF THE DRAWINGS

FIG. 1 is a flowchart of a network access method according to an embodiment of the present invention; and
FIG. 2 is a schematic diagram of a network access apparatus according to an embodiment of the present invention.

### DETAILED DESCRIPTION

The technical solutions of the present invention are further described in detail below with reference to the accompanying drawings and embodiments.

In the embodiments of the present invention, roaming users may evenly select different communication networks for providing services in a scenario where networks are shared, so as to avoid a problem that no roaming user accesses other communication networks because all roaming users access a certain communication network.

The embodiments of the present invention are applicable to multiple communication networks, for example, time division-synchronous code division multiple access (Time Division-Synchronous Code Division Multiple Access, TD-SCDMA), TD-LTE (Long Term Evolution, long term evolution), or wideband code division multiple access (Wideband Code Division Multiple Access, WCDMA). The following embodiments take TD-LTE as an example.

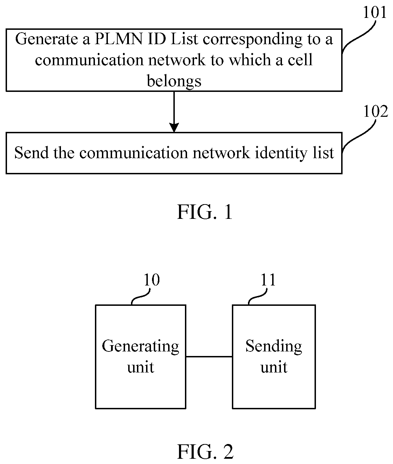

FIG. 1 is a flowchart of a network access method according to an example of the present invention. As shown in FIG. 1, the example specifically includes the following steps:
Step 101: Generate a communication network identifier list corresponding to a communication network to which a cell belongs.

In a scenario where networks are shared, a cell may belong to multiple communication networks (operator networks), for example, operators A, B, C, and D, which include one primary operator and multiple secondary operators.

An evolved-UMTS terrestrial radio access network (Evolved-UMTS Terrestrial Radio Access Network, UTRAN) side generates a system message SystemInformationBlockType1, where the message carries a communication network identifier list, which may specifically be a PLMN ID List. The PLMN ID List includes operator identifiers corresponding to all communication networks A, B, C, and D to which the cell belongs, where the operator identifiers are specifically PLMN IDs. General order of the PLMN ID List is: A PLMN ID of the primary operator ranks first, and PLMN IDs of the secondary operators follow.

In addition, the PLMN IDs (namely, A, B, C, and D) are arranged in the PLMN ID List in any order according to examples which are not part of the invention, where the any order is any non-fixed order of arrangement, for example, the PLMN IDs may be arranged in random order, for example, (A, B, C, D), (B, C, A, D), and (C, D, A, B); in the present invention, they are arranged in rotation order, for example, (A, B, C, D), (B, C, D, A), (C, D, A, B), and (B, C, D, A).

Preferably, every change of the rotation order of the PLMN IDs in the PLMN ID List may be performed according to a rotation period; optionally, the rotation period may be set according to requirements, and after the setting, every rotation of the PLMN IDs is performed according to the rotation period.

In an example which is not part of the invention, an interval of the rotation period may be fixed, and therefore, PLMN ID List rotation is performed at an equal interval. For each PLMN ID in the PLMN ID List, an opportunity of being arranged at a fixed position, for example, a first position in the PLMN ID List, is equal.

Certainly, the interval of the rotation period may also change. For some special scenarios, it is wished that some communication networks are accessed at a high probability and other communication networks are accessed at a low probability, and particularly various communication networks are accessed according to a certain proportion. In this case, a weight parameter needs to be added to provide different weights for different PLMN IDs in the PLMN ID List, so as to present a probability of different PLMN IDs being arranged at a fixed position (for example, a first position), for example, the number of consecutive periods.

It is assumed that the weight parameter is N, a rotation period parameter is T, and there are four PLMN IDs: A, B, C, and D, where a weight parameter Nₐ of A is 4, a weight parameter N_{b} of B is 3, a weight parameter N_{c} of C is 2, and a weight parameter N_{d} of D is 1; the rotation period parameter is T = 1 (day), and the first position of the PLMN ID List is taken as an example.

The parameter configuration in the scenario means broadcasting in broadcast sequence of A*** and lasting Nₐ x T = 4 days; broadcasting in broadcast sequence of B*** and lasting N_{b} x T = 3 days; broadcasting in broadcast sequence of C*** and lasting N_{c} x T = 2 days; and broadcasting in broadcast sequence of D*** and lasting N_{d} x T = 1 day.

Step 102: Send the communication network identifier list.

The E-UTRAN side periodically broadcasts a SystemInformationBlockType1 message over a broadcast channel, where the message carries a PLMN ID List. A newly accessed UE actively reads the SystemInformationBlockType1 message in the broadcast channel, obtains the PLMN ID List from the message, and may access a communication network corresponding to a PLMN ID in the PLMN ID List according to the PLMN ID List.

Optionally, every UE accesses a communication network according to a PLMN ID at a certain fixed position in the PLMN ID List. Preferably, every UE accesses a communication network according to a PLMN ID at the first position in the PLMN ID List. For a UE that can access only the communication network corresponding to the PLMN ID at the first position in the PLMN ID List, no matter which communication network corresponds to the PLMN ID at the first position in the PLMN ID List, the UE accesses the communication network. Therefore, for the UE, which communication network is selected for access depends on a network side rather than the UE itself.

When the network side generates a PLMN ID List, in an example which is not part of the invention, the network side rotates the PLMN IDs in the PLMN ID List according to a certain fixed rotation period. If the interval of the rotation period is fixed, the probability of being arranged at the first position in the PLMN ID List is the same for every PLMN ID (A, B, C, and D), and therefore, every communication network may be accessed by the UE at an equal probability.

In this way, it is avoided that when the PLMN IDs are fixed in the PLMN ID List, the UE accesses only the communication network corresponding to the first PLMN ID every time, and other communication networks cannot be accessed. The network side effectively controls that every communication network may be accessed by the UE at the equal probability, and effectively optimizes a resource of every communication network. Therefore, a case that more communication fees are charged by a first operator in the PLMN ID List because there are more access opportunities while few communication fees are charged by other operators because there are few access opportunities is avoided, and communication fees charged by all operators are averaged.

If the network side rotates the PLMN IDs in the PLMN ID List according to a certain weight when the network side generates the PLMN ID List, as in the present invention, different weights may be provided for different PLMN IDs to set the number of consecutive periods in which a PLMN ID is arranged at a certain fixed position (for example, the first position) in the PLMN ID List, so as to implement controlling of the probability of accessing different communication networks by the UE. Therefore, the network side finely controls the probability of accessing different operator networks by the UE.

FIG. 2 is a schematic diagram of a network access apparatus according to an example of the present invention. As shown in FIG. 2, the example includes a generating unit 10 and a sending unit 11.

The generating unit 10 is configured to generate a communication network identifier list corresponding to a communication network to which a cell belongs, where communication network identifiers in the communication network identifier list are arranged in any order.

Specifically, in a scenario where networks are shared, a cell may belong to multiple communication networks (operator networks); the generating unit 10 generates a system message, where the system message carries a communication network identifier list, which may specifically be a PLMN ID List. The PLMN ID List includes operator identifiers corresponding to all communication networks to which the cell belongs, where the operator identifiers are specifically PLMN IDs. In addition, the PLMN IDs in the PLMN ID List are arranged in any order, where the any order is any non-fixed order of arrangement, for example, the PLMN IDs are arranged in random order, and may also be arranged in rotation order. In the present invention, every change of the rotation order of the PLMN IDs in the PLMN ID List is performed according to a rotation period. In an example which is not part of the invention, an interval of the rotation period may be fixed, and therefore, PLMN ID List rotation is performed at an equal interval. For each PLMN ID in the PLMN ID List, an opportunity of being arranged at a fixed position, for example, a first position in the PLMN ID List, is equal.Certainly, the interval of the rotation period may also change. For some special scenarios, it is wished that some communication networks are accessed at a high probability and other communication networks are accessed at a low probability. In this case, different weights are provided for different PLMN IDs to set the number of consecutive periods in which a PLMN ID is arranged at a fixed position (for example, the first position) in the PLMN ID List.

The sending unit 11 is configured to send the communication network identifier list, which is used by a UE for selecting a communication network corresponding to a communication network identifier at a fixed position in the communication network identifier list for access.

Specifically, the sending unit 11 sends the generated system message to the UE, where the message carries a PLMN ID List; the UE obtains the PLMN ID List from the message, and may access a communication network corresponding to a PLMN ID in the PLMN ID List according to the PLMN ID List.

Optionally, every UE accesses a communication network according to a PLMN ID at a certain fixed position (such as the first position) in the PLMN ID List. For a UE that can access only the communication network corresponding to the PLMN ID at the first position in the PLMN ID List, no matter which communication network corresponds to the PLMN ID at the first position in the PLMN ID List, the UE accesses the communication network. Therefore, for the UE, which communication network is selected for access depends on a network side rather than the UE itself.

In this way, it is avoided that when the PLMN IDs are fixed in the PLMN ID List, the UE accesses only the communication network corresponding to the first PLMN ID every time, and other communication networks cannot be accessed. The network side effectively controls that every communication network may be accessed by the UE at an equal probability, and effectively optimizes a resource of every communication network. Therefore, a case that more communication fees are charged by a first operator in the PLMN ID List because there are more access opportunities while few communication fees are charged by other operators because there are few access opportunities is avoided, and communication fees charged by all operators are averaged.

Persons skilled in the art should be further aware that units and algorithm steps of the examples described in combination with the embodiments disclosed here can be implemented by electronic hardware, computer software, or a combination of the two. To clearly describe interchangeability between the hardware and the software, compositions and steps of every embodiment are generally described in the foregoing according to functions. Whether the functions are executed by hardware or software depends on particular applications and design constraint conditions of the technical solutions. Persons skilled in the art may use different methods to implement the described functions for every particular application, but it should not be considered that the implementation goes beyond the scope of the present invention.

The steps of the method or algorithm described in combination with the embodiments disclosed here may be implemented by hardware, a software module executed by a processor or a combination of the two. The software module may be disposed in a random access memory (RAM), a memory, a read only memory (ROM), an electrically programmable ROM, an electrically erasable programmable ROM, a register, a hard disk, a removable disk, a CD-ROM, or any other storage media well-known in the art.

The foregoing specific implementation manners further describe the objectives, technical solutions, and benefits of the present invention in detail. It should be understandable that the foregoing are merely the specific implementation manners of the present invention, and are not intended to limit the protection scope of the present invention.

## Claims

1. A network access method, comprising:
generating (101) a communication network identifier list corresponding to a communication network to which a cell belongs, wherein all communication network identifiers in the communication network identifier list are arranged in rotation order according to a rotation period and a weight parameter, and the communication network identifiers are corresponding to all communication networks; and
sending (102) the communication network identifier list, which is used by a user equipment UE for selecting a communication network corresponding to a communication network identifier at a fixed position in the communication network identifier list for access.

2. A network access apparatus, comprising:
a generating unit (10), configured to generate a communication network identifier list corresponding to a communication network to which a cell belongs, wherein all communication network identifiers in the communication network identifier list are arranged in rotation order according to a rotation period and a weight parameter, and the communication network identifiers are corresponding to all communication networks; and
a sending unit (11), configured to send the communication network identifier list, which is used by a UE for selecting a communication network corresponding to a communication network identifier at a fixed position in the communication network identifier list for access.

## Patentansprüche

1. Netzzugangsverfahren, das die folgenden Schritte umfasst:
Erzeugen (101) einer Kommunikationsnetzkennungsliste, die einem Kommunikationsnetz entspricht, dem eine Zelle angehört, wobei alle Kommunikationsnetzkennungen in der Kommunikationsnetzkennungsliste gemäß einer Rotationsperiode und einem Gewichtsparameter in einer rotierenden Reihenfolge angeordnet sind und die Kommunikationsnetzkennungen allen Kommunikationsnetzen entsprechen; und
Senden (102) der Kommunikationsnetzkennungsliste, die von einem Benutzergerät, UE, zur Auswahl eines Kommunikationsnetzes, das einer Kommunikationsnetzkennung an einer festen Position in der Kommunikationsnetzkennungsliste entspricht, zum Zugang verwendet wird.

2. Netzzugangsvorrichtung, die Folgendes umfasst:
eine Erzeugungseinheit (10), die ausgelegt ist zum Erzeugen einer Kommunikationsnetzkennungsliste, die einem Kommunikationsnetz entspricht, dem eine Zelle angehört, wobei alle Kommunikationsnetzkennungen in der Kommunikationsnetzkennungsliste gemäß einer Rotationsperiode und einem Gewichtsparameter in einer rotierenden Reihenfolge angeordnet sind und die Kommunikationsnetzkennungen allen Kommunikationsnetzen entsprechen; und
eine Sendeeinheit (11), die ausgelegt ist zum Senden der Kommunikationsnetzkennungsliste, die von einem UE zur Auswahl eines Kommunikationsnetzes, das einer Kommunikationsnetzkennung an einer festen Position in der Kommunikationsnetzkennungsliste entspricht, zum Zugang verwendet wird.

## Revendications

1. Procédé d'accès au réseau, comprenant les étapes suivantes :
générer (101) une liste d'identifiants de réseaux de communication correspondant à un réseau de communication auquel appartient une cellule, où tous les identifiants de réseaux de communication dans la liste d'identifiants de réseaux de communication sont disposés suivant un ordre de rotation selon une période de rotation et un paramètre de poids, et les identifiants de réseaux de communication correspondent à tous les réseaux de communication ; et
envoyer (102) la liste d'identifiants de réseaux de communication, qui est utilisée par un équipement d'utilisateur, UE, pour sélectionner un réseau de communication correspondant à un identifiant de réseau de communication à une position fixée dans la liste d'identifiants de réseaux de communication pour accès.

2. Appareil d'accès au réseau, comprenant :
une unité de génération (10), configurée pour générer une liste d'identifiants de réseaux de communication correspondant à un réseau de communication auquel appartient une cellule, où tous les identifiants de réseaux de communication dans la liste d'identifiants de réseaux de communication sont disposés suivant un ordre de rotation selon une période de rotation et un paramètre de poids, et les identifiants de réseaux de communication correspondent à tous les réseaux de communication ; et
une unité d'envoi (11), configurée pour envoyer la liste d'identifiants de réseaux de communication, qui est utilisée par un UE pour sélectionner un réseau de communication correspondant à un identifiant de réseau de communication à une position fixée dans la liste d'identifiants de réseaux de communication pour accès.
